# EUROPEAN PATENT APPLICATION

(11) **EP 4 831 861 A1**
(43) Date of publication of application: **28.10.2026**
(21) Application number: 26167318.0
(22) Date of filing: 24.03.2026
(51) Int. Cl.: G06F 40/216, G06F 16/3329, G06F 40/30, G06N 20/00

(54) **INFORMATION PROCESSING APPARATUS, COMPUTER PROGRAM, AND INFORMATION PROCESSING METHOD**

(30) Priority: 25.04.2025 JP 2025073684
(71) Applicant: FUJITSU LIMITED, Kawasaki-shi, Kanagawa 211-8588 (JP)
(72) Inventor: KAYABA, Keita, Kawasaki-shi, Kanagawa, 211-8588 (JP); YAMAOKA, Yuji, Kawasaki-shi, Kanagawa, 211-8588 (JP)
(74) Representative: Hoffmann Eitle

(57) **Abstract**

A processing unit acquires a first text output from a machine learning model as a citation portion of a source document, the citation portion serving as a basis for a document generated by the machine learning model based on the source document. The processing unit extracts, from the source document, a second text having the highest similarity to the first text. The processing unit compares the similarity between the first text and the second text with a predetermined value. If the similarity is higher than a predetermined value, the processing unit outputs the second text as the citation portion of the source document.

## Description

### FIELD

The present embodiments relate to an information processing apparatus, a computer program, and an information processing method.

### BACKGROUND

In generating text using a machine learning model such as a large language model (LLM), a technique called retrieval-augmented generation (RAG) may be used. RAG is a technique that enables machine learning models to refer to external information that are not included in their training data, thereby enhancing the reliability of model-generated text. In addition, in order to make it easier for humans to verify outputs from machine learning models, there are also techniques that cause the machine learning models to cite bases.

For example, a question answering device has been proposed that presents, when given a reference text from which an answer is to be extracted and a question associated with the reference text, an answer and a basis for the answer using a machine reading comprehension model constructed with a neural network or the like.

In this connection, a system has been proposed that identifies seminal cases through data mining of electronic legal documents. Another system has also been proposed that uses a data-mining technique to determine which case is most frequently cited for a specific reason for citation, among a corpus of legal documents. See, for example, the following literatures.
International Publication Pamphlet No. WO 2022/079826
U.S. Patent Application Publication No. 2019/0197100
U.S. Patent Application Publication No. 2019/0310988

When instructed to cite a basis, a machine learning model may produce erroneous citations. For example, the machine learning model may output a text that is not present in a source document referenced as external information as if it were cited from the source document.

### SUMMARY

In one aspect, an object of the present disclosure is to reduce erroneous citations.

In one aspect, there is provided an information processing apparatus including: a storage unit configured to store a first text output from a machine learning model as a citation portion of a source document, the citation portion serving as a basis for a document generated by the machine learning model based on the source document; and a processing unit configured to: extract, from the source document, a second text having a highest similarity to the first text; compare a similarity between the first text and the second text with a predetermined value; and output the second text as the citation portion upon determining that the similarity is higher than the predetermined value.

### BRIEF DESCRIPTION OF DRAWINGS

FIG. 1 is a diagram for describing an information processing apparatus according to a first embodiment;
FIG. 2 illustrates an example of hardware of an information processing apparatus according to a second embodiment;
FIG. 3 illustrates an example of functions of the information processing apparatus;
FIG. 4 is a flowchart illustrating an example of a process performed by the information processing apparatus;
FIG. 5 illustrates the first half of a specific example of the process performed by the information processing apparatus;
FIG. 6 illustrates the second half of the specific example of the process performed by the information processing apparatus;
FIG. 7 illustrates an example of generating LLM input data;
FIG. 8 illustrates an example of an output text from an LLM;
FIG. 9 illustrates an example of erroneous citation text extraction;
FIG. 10 illustrates an example of text segmentation;
FIG. 11 illustrates an example of similarity calculation;
FIG. 12 illustrates an example of similarity threshold determination;
FIG. 13 illustrates an example of a correction process;
FIG. 14 illustrates a first example of a self-correction instruction;
FIG. 15 illustrates a second example of a self-correction instruction;
FIG. 16 illustrates a third example of a self-correction instruction;
FIG. 17 illustrates an example of generating LLM input data based on a self-correction instruction;
FIG. 18 illustrates an example of an output text output from the LLM and reflecting a self-correction instruction;
FIG. 19 illustrates an example of process completion determination;
FIG. 20 illustrates an example of utilization of a basis citation; and
FIG. 21 illustrates an example of an erroneous basis citation.

### DESCRIPTION OF EMBODIMENTS

Hereinafter, embodiments will be described with reference to the drawings.

### [First Embodiment]

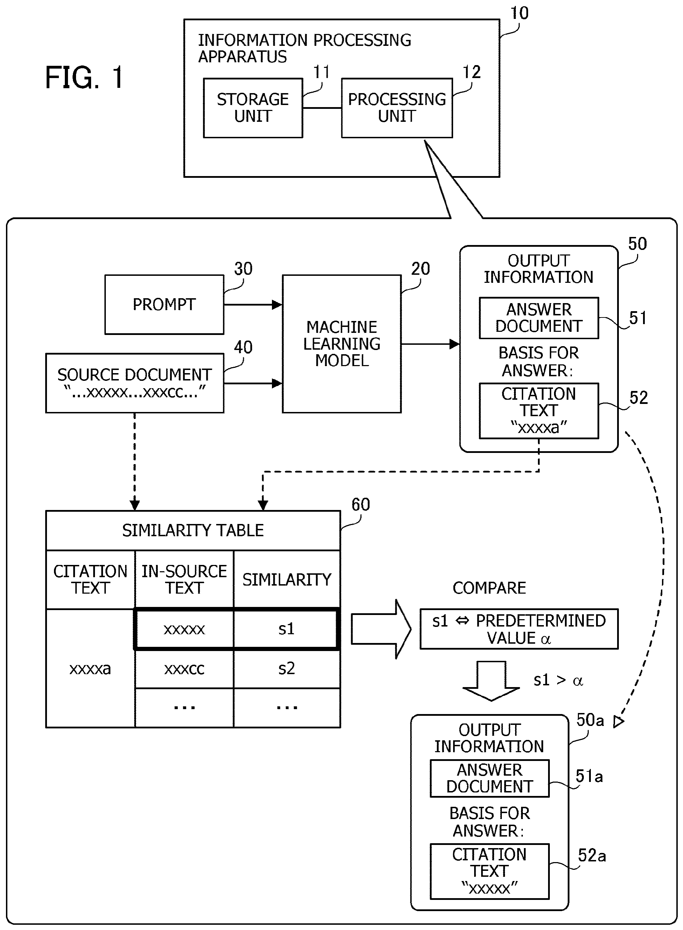

FIG. 1 is a diagram for describing an information processing apparatus according to a first embodiment. An information processing apparatus 10 includes a storage unit 11 and a processing unit 12. The storage unit 11 may be a volatile semiconductor memory such as a random access memory (RAM) or a non-volatile storage such as a hard disk drive (HDD) or a flash memory. The processing unit 12 is, for example, a processor such as a central processing unit (CPU), a graphics processing unit (GPU), or a digital signal processor (DSP). Note that the processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as a "multiprocessor" or simply as a "processor".

The processing unit 12 uses a machine learning model 20. The machine learning model 20 is, for example, an LLM. The machine learning model 20 may also be referred to as a trained model, an AI model, a generative AI model, or the like. The information processing apparatus 10 may include the machine learning model 20. An information processing apparatus different from the information processing apparatus 10 may include the machine learning model 20. The information processing apparatus 10 may be capable of communicating with another information processing apparatus including the machine learning model 20 via a network.

The machine learning model 20 outputs information generated using RAG. A prompt 30 and a source document 40 are input into the machine learning model 20. The prompt 30 is an instruction written in natural language. The prompt 30 includes, for example, an instruction to output an answer to a given question. The prompt 30 also includes an instruction to cite a basis for the answer from the source document 40. The source document 40 is a document that is referenced by the machine learning model 20 in order to generate a response to the prompt 30. The source document 40 is written in natural language. For example, it is assumed that the source document 40 includes a description "...xxxxx...xxxcc..."

The machine learning model 20 outputs output information 50 in response to the inputs of the prompt 30 and the source document 40. For example, the output information 50 includes an answer document 51 and a citation text 52. The answer document 51 is a text generated by the machine learning model 20 as an answer to the question included in the prompt 30. The citation text 52 is a text generated by the machine learning model 20 as a basis for the answer document 51. As an example, it is assumed that the citation text 52 is "xxxxa". "xxxxa" is a text that is not included in the source document 40. That is, the citation text 52 is an erroneously cited text, or an erroneous citation text.

The following are examples of erroneous citations generated by the machine learning model 20. A first example is a modification to a particle or auxiliary verb, a punctuation mark, a line feed, or others. A second example is a change in the type of symbol such as quotation marks. A third example is a modification in which a certain text included in the source document 40 is replaced with another text included in the source document 40. A fourth example is a citation not from the source document 40, but from the answer document 51 generated by the model itself. In addition to the first to fourth examples, other examples may also occur as erroneous citations.

As described above, the output information 50 generated by the machine learning model 20 may include a text erroneously cited by the machine learning model 20. To address this, the information processing apparatus 10 is configured to reduce erroneous citations.

First, the processing unit 12 acquires the output information 50. The processing unit 12 may acquire the output information 50 from another information processing apparatus including the machine learning model 20. The processing unit 12 stores the output information 50 in the storage unit 11. The storage unit 11 stores the output information 50. The citation text 52 included in the output information 50 may be referred to as a first text.

The processing unit 12 extracts, from the source document 40, a second text having the highest similarity to the citation text 52. For example, the processing unit 12 identifies a plurality of texts in the source document 40. Each text may be a set of one or more sentences. Each text may be a set of one or more words. The processing unit 12 calculates the similarity between the citation text 52 and each text identified from the source document 40. In this connection, the processing unit 12 calculates the similarity between two texts based on, for example, the Levenshtein distance between these two texts. The Levenshtein distance is also referred to as an edit distance. The Levenshtein distance is an index for measuring the similarity between two character strings. The Levenshtein distance is defined as the minimum number of editing operations needed to convert one string into another. The editing operations include three operations: insertion, deletion, and replacement. The processing unit 12 may calculate the similarity using another method such as embedding representations. For example, a higher value indicating the similarity between two texts indicates a higher degree of similarity between the two texts.

A similarity table 60 is information holding the similarity between the citation text 52 and a text included in the source document 40. The similarity table 60 is stored in, for example, the storage unit 11. The similarity table 60 includes the following items: Citation Text, In-Source Text, and Similarity. The Citation Text item contains the citation text 52. The In-Source Text item contains a text included in the source document 40. The Similarity item contains the similarity between the citation text 52 and the text, calculated by the processing unit 12. For example, the similarity between the citation text 52 ("xxxxa") and an in-source text ("xxxxx") is "s1". The similarity between the citation text 52 ("xxxxa") and an in-source text ("xxxcc") is "s2". The similarities between the citation text 52 and other in-source texts are also registered in the similarity table 60. In the case where the output information 50 includes a plurality of citation texts, the plurality of citation texts are registered in the similarity table 60.

The processing unit 12 is able to acquire the second text having the highest similarity to the citation text 52 in the source document 40, for example, with reference to the similarity table 60. In this example, it is assumed that the similarity "s1" is the highest similarity among the similarities between the citation text 52 and the in-source texts in the similarity table 60. In this case, the processing unit 12 acquires the in-source text "xxxxx" as the second text.

The processing unit 12 compares the similarity between the first text and the second text with a predetermined value. For example, the processing unit 12 compares the similarity "s1" between the citation text 52 ("xxxxa") and the text ("xxxxx") with a predetermined value α. The predetermined value α is determined in advance. The process of comparing the similarity between the first text and the second text with the predetermined value is also referred to as a process of determining whether the similarity is higher than the predetermined value. The predetermined value α may be referred to as a threshold α.

If the similarity is higher than the predetermined value, the processing unit 12 outputs the second text as a citation from the source document 40. For example, if s1 > α, the processing unit 12 outputs the text ("xxxxx") as a citation portion from the source document 40. More specifically, the processing unit 12 converts the output information 50 into output information 50a. The output information 50a includes an answer document 51a and a citation text 52a. The answer document 51a corresponds to the answer document 51. The answer document 51a may be the same as the answer document 51 or may be a modification version of the answer document 51 generated by the processing unit 12 based on the citation text 52a. The citation text 52a is "xxxxx".

The processing unit 12 generates the output information 50a by replacing the citation text 52 of the output information 50 with the citation text 52a. At this time, in the case where the answer document 51 includes the text "xxxxa", the processing unit 12 may replace the text "xxxxa" with the citation text 52a "xxxxx", thereby obtaining the answer document 51a. The processing unit 12 provides the user with the output information 50a instead of the output information 50. In this way, the information processing apparatus 10 is able to appropriately correct the erroneous citation generated by the machine learning model 20.

If the similarity "s1" is not higher than the predetermined value α, the processing unit 12 may issue a self-correction instruction to the machine learning model 20. The self-correction instruction is an instruction to cause the machine learning model 20 to correct the erroneous citation.

The self-correction instruction may include a candidate text that is a candidate for a citation portion from the source document 40. The processing unit 12 may select the candidate text based on the similarity between the citation text 52 and each of a plurality of texts in the source document 40. For example, the processing unit 12 may select, as candidate texts, a predetermined number of texts from the plurality of texts in descending order of similarity. In addition to selecting first candidate texts based on similarity, the processing unit 12 may randomly select a second candidate text from the plurality of texts.

The processing unit 12 may generate a new prompt indicating an instruction to correct the erroneous citation based on the candidate text and also correct the answer document and the citation text serving as a basis for the answer document, and input the prompt into the machine learning model 20 together with the source document 40. By doing so, it is expected that a more accurate citation text is obtained from the machine learning model 20. Thereafter, the processing unit 12 performs the above process again using a newly obtained citation text, and outputs output information including the appropriate citation text.

In this connection, in the case where the citation text exactly matches any of in-source texts, the processing unit 12 does not need to calculate the similarity between the citation text and each in-source text. In this case, the processing unit 12 is able to use the citation text output by the machine learning model 20 as it is, as a citation portion from the source document 40.

In addition, in the present example, if the similarity "s1" is equal to the predetermined value α, the processing unit 12 may perform a correction by replacing the citation text 52 with the citation text 52a, that is, a mechanical correction process, or may issue a self-correction instruction to the machine learning model 20. Which process the processing unit 12 performs when s1 = α is set in advance.

As described above, with the information processing apparatus 10, a first text output from the machine learning model 20 is acquired as a citation portion from the source document 40, the citation portion serving as a basis for a document generated by the machine learning model 20 based on the source document 40. The first text is stored in the storage unit 11. A second text having the highest similarity to the first text is extracted from the source document 40. The similarity between the first text and the second text is compared with a predetermined value. If the similarity is higher than the predetermined value, the second text is output as a citation portion.

By doing so, the information processing apparatus 10 is able to reduce erroneous citations. As a result, the information processing apparatus 10 is able to support a user so that the user is able to efficiently identify a citation portion in the source document 40 and verify the validity of the output of the machine learning model 20 based on the citation portion.

Further, by adjusting the predetermined value α for comparison with the similarity, the information processing apparatus 10 is able to control which correction process to prioritize: the mechanical correction, which is not performed by the machine learning model 20, or the self-correction that is performed by the machine learning model 20. For example, by setting the predetermined value α to a relatively high value, the information processing apparatus 10 is able to prioritize the self-correction that is performed by the machine learning model 20 over the mechanical correction. Although the machine learning model 20 needs processing cost, it is possible to correct erroneous citations with high accuracy based on semantic information of the context. Therefore, prioritizing the self-correction of the machine learning model 20 is able to improve the accuracy of erroneous citation correction. On the other hand, by setting the predetermined value α to a relatively low value, the information processing apparatus 10 is able to prioritize the mechanical correction. By increasing the probability of performing the mechanical correction, the information processing apparatus 10 is also able to prioritize a reduction in processing cost.

### [Second Embodiment]

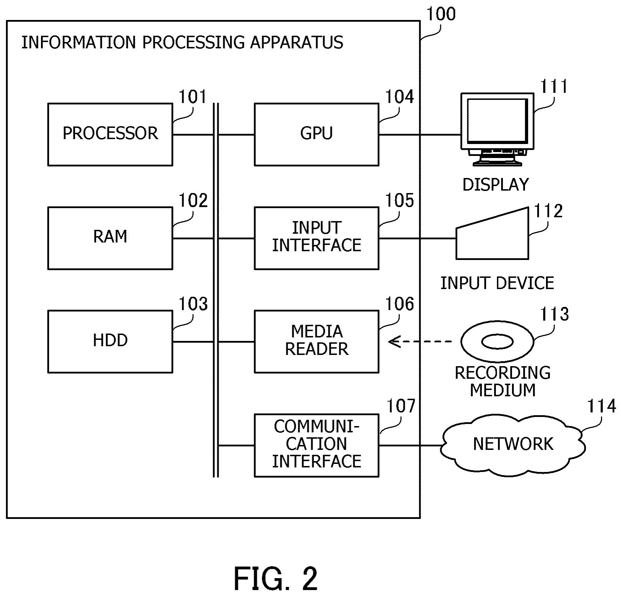

FIG. 2 illustrates an example of hardware of an information processing apparatus according to a second embodiment. The information processing apparatus 100 performs text generation using LLM-based RAG. The information processing apparatus 100 may be referred to as a computer. The information processing apparatus 100 includes a processor 101, a RAM 102, an HDD 103, a GPU 104, an input interface 105, a media reader 106, and a communication interface 107. These units included in the information processing apparatus 100 are connected to a bus inside the information processing apparatus 100. The processor 101 is an example of the processing unit 12 of the first embodiment. The RAM 102 or the HDD 103 is an example of the storage unit 11 of the first embodiment.

The processor 101 is an arithmetic device that executes program instructions. The processor 101 is, for example, a CPU. The processor 101 loads at least a part of a program and data stored in the HDD 103 into the RAM 102 and executes the program. The processor 101 may include a plurality of processor cores. The information processing apparatus 100 may include a plurality of processors. A processor that performs a certain process among a plurality of processes by the information processing apparatus 100 may be different from a processor that performs a process different from the certain process among the plurality of processes. At least some of the processes described below may be performed in parallel using a plurality of processors or processor cores. A set of a plurality of processors may be referred to as a "multiprocessor" or simply as a "processor". The processor may be referred to as "processor circuitry".

The RAM 102 is a volatile semiconductor memory that temporarily stores programs to be executed by the processor 101 and data to be used by the processor 101 during its operation. The information processing apparatus 100 may include a memory of a type other than RAM, or may include a plurality of memories.

The HDD 103 is a non-volatile storage device that stores software programs such as an operating system (OS), middleware, and application software, and data. The information processing apparatus 100 may include another type of storage device such as a flash memory or a solid state drive (SSD), or may include a plurality of non-volatile storage devices.

The GPU 104 outputs images to a display 111 connected to the information processing apparatus 100 in accordance with instructions from the processor 101. The display 111 may be any type of display such as a cathode ray tube (CRT) display, a liquid crystal display (LCD), a plasma display, or an organic electro-luminescence (OEL) display.

The input interface 105 receives an input signal from an input device 112 connected to the information processing apparatus 100 and outputs the input signal to the processor 101. As the input device 112, a pointing device such as a mouse, a touch panel, a touch pad, or a trackball, a keyboard, a remote controller, a button switch, or the like may be used. A plurality of types of input devices may be connected to the information processing apparatus 100.

The media reader 106 is a reading device that reads programs and data recorded on a recording medium 113. As the recording medium 113, for example, a magnetic disk, an optical disc, a magneto-optical disk (MO), a semiconductor memory, or the like may be used. Magnetic disks include a flexible disk (FD) and an HDD. Optical discs include a compact disc (CD) and a digital versatile disc (DVD).

For example, the media reader 106 copies a program or data read from the recording medium 113 to another recording medium such as the RAM 102 or the HDD 103. The read program is executed by, for example, the processor 101. The recording medium 113 may be a portable recording medium, and may be used to distribute programs and data. The recording medium 113 and the HDD 103 may be referred to as computer-readable storage media.

The communication interface 107 is connected to a network 114 and communicates with other information processing apparatuses via the network 114. The communication interface 107 may be a wired communication interface connected to a wired communication device such as a switch or a router, or may be a wireless communication interface connected to a wireless communication device such as a base station or an access point.

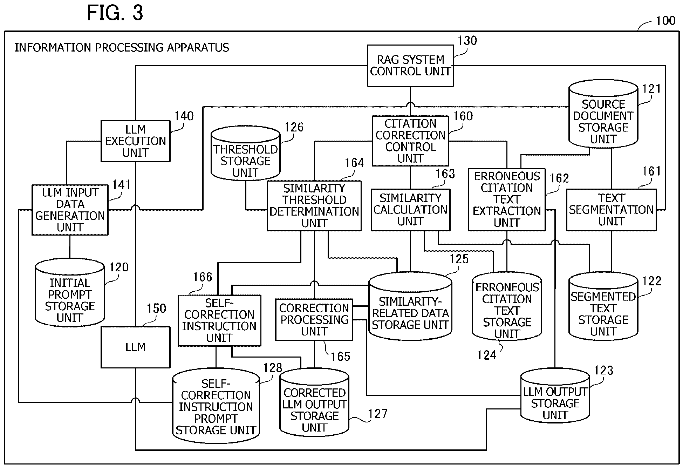

FIG. 3 illustrates an example of functions of the information processing apparatus. The information processing apparatus 100 includes an initial prompt storage unit 120, a source document storage unit 121, a segmented text storage unit 122, an LLM output storage unit 123, an erroneous citation text storage unit 124, a similarity-related data storage unit 125, a threshold storage unit 126, a corrected LLM output storage unit 127, and a self-correction instruction prompt storage unit 128. The storage areas of the RAM 102 and the HDD 103 are used for the initial prompt storage unit 120, the source document storage unit 121, the segmented text storage unit 122, the LLM output storage unit 123, the erroneous citation text storage unit 124, the similarity-related data storage unit 125, the threshold storage unit 126, the corrected LLM output storage unit 127, and the self-correction instruction prompt storage unit 128.

Further, the information processing apparatus 100 includes a RAG system control unit 130, an LLM execution unit 140, an LLM input data generation unit 141, an LLM 150, a citation correction control unit 160, a text segmentation unit 161, an erroneous citation text extraction unit 162, a similarity calculation unit 163, a similarity threshold determination unit 164, a correction processing unit 165, and a self-correction instruction unit 166. The RAG system control unit 130, the LLM execution unit 140, the citation correction control unit 160, the text segmentation unit 161, the erroneous citation text extraction unit 162, the similarity calculation unit 163, the similarity threshold determination unit 164, the correction processing unit 165, and the self-correction instruction unit 166 are implemented by the processor 101 executing a program stored in the RAM 102. The LLM 150 is a machine learning model included in the information processing apparatus 100. The LLM 150 is stored in the RAM 102 or the HDD 103. The LLM 150 may be held in another computer connected to the information processing apparatus 100 via the network 114.

The initial prompt storage unit 120 stores an initial prompt. The initial prompt is a prompt that is first input into the LLM 150 for a task.

The source document storage unit 121 stores a source document. The source document is a document that is referenced by the LLM 150 to generate an answer to a task. The source document is used as a citation source of a text serving as a basis for the answer. The source document storage unit 121 may store a plurality of source documents.

The segmented text storage unit 122 stores segmented texts. Each segmented text is a text obtained by segmenting a source document into units each including one or more sentences. That is, one segmented text may be one sentence or a collection of a plurality of sentences. A segmented text may be a collection of one or more words included in the source document.

The LLM output storage unit 123 stores LLM output information output from the LLM 150. The LLM output information includes an answer document generated by the LLM 150 and a text serving as a basis for the answer document. The text serving as the basis for the answer document is a citation text cited from the source document.

The erroneous citation text storage unit 124 stores an erroneous citation text. The erroneous citation text is a text erroneously cited from a source document. The erroneous citation text is a text not included in the source document among citation texts included in output information stored in the LLM output storage unit 123.

The similarity-related data storage unit 125 stores similarity-related data. The similarity-related data is data related to the similarity between an erroneous citation text and each of a plurality of texts included in a source document.

The threshold storage unit 126 stores a threshold used for comparison with the similarity. For example, the threshold is set in advance in the threshold storage unit 126 by the user.

The corrected LLM output storage unit 127 stores LLM output information corrected by the correction processing unit 165.

The self-correction instruction prompt storage unit 128 stores a self-correction instruction prompt. The self-correction instruction prompt is a prompt for instructing the LLM 150 to correct a citation text. The self-correction instruction prompt is generated by the self-correction instruction unit 166.

The RAG system control unit 130 controls a RAG system. The RAG system is a system that performs text generation using RAG. In the example of the second embodiment, the RAG system is implemented by the information processing apparatus 100. The RAG system may be implemented by two or more information processing apparatuses. For example, as described earlier, the LLM 150 may be held in an information processing apparatus different from the information processing apparatus 100. The RAG system control unit 130 controls execution of processes performed by the LLM execution unit 140, the citation correction control unit 160, and the text segmentation unit 161.

The LLM execution unit 140 inputs LLM input data into the LLM 150. The LLM input data is generated by the LLM input data generation unit 141. The LLM input data is an instruction written in natural language for the LLM. The LLM input data includes a source document.

The LLM input data generation unit 141 generates LLM input data based on an initial prompt and a source document, and gives the LLM input data to the LLM execution unit 140. When a self-correction instruction prompt is stored in the self-correction instruction prompt storage unit 128, the LLM input data generation unit 141 generates new LLM input data based on the self-correction instruction prompt and the source document, and gives the new LLM input data to the LLM execution unit 140.

The LLM 150 generates LLM output information based on the LLM input data. The LLM 150 stores the LLM output information in the LLM output storage unit 123.

The citation correction control unit 160 controls execution of processes performed by the erroneous citation text extraction unit 162, the similarity calculation unit 163, and the similarity threshold determination unit 164.

The text segmentation unit 161 segments a source document into a plurality of segmented texts. The text segmentation unit 161 stores the plurality of segmented texts in the segmented text storage unit 122.

The erroneous citation text extraction unit 162 extracts an erroneous citation text based on a comparison between a source document and a citation text included in LLM output information. Specifically, in the case where the source document does not include any text that exactly matches the citation text, the erroneous citation text extraction unit 162 sets the citation text as an erroneous citation text. The erroneous citation text extraction unit 162 stores the erroneous citation text in the erroneous citation text storage unit 124.

The similarity calculation unit 163 calculates the similarity between an erroneous citation text and a segmented text. The similarity calculation unit 163 registers the calculated similarity in the similarity-related data in association with the set of the erroneous citation text and the segmented text. For example, the similarity calculation unit 163 calculates the similarity between an erroneous citation text and a segmented text, based on the Levenshtein distance between the erroneous citation text and the segmented text. Alternatively, the similarity calculation unit 163 may calculate the similarity using another method such as embedding representations.

The similarity threshold determination unit 164 compares a similarity registered in the similarity-related data with a threshold stored in the threshold storage unit 126, to determines the magnitude relationship between the similarity and the threshold. Here, it is assumed that a larger value indicating the similarity between an erroneous citation text and a segmented text indicates a higher similarity therebetween.

Specifically, in the case where the highest similarity among the similarities between an erroneous citation text and segmented texts is greater than the threshold, the similarity threshold determination unit 164 causes the correction processing unit 165 to perform a correction process on the erroneous citation text. On the other hand, in the case where the highest similarity among the similarities between the erroneous citation text and the segmented texts is smaller than the threshold, the similarity threshold determination unit 164 causes the self-correction instruction unit 166 to issue a self-correction instruction for the erroneous citation text. In the case where the highest similarity among the similarities between the erroneous citation text and the segmented texts is equal to the threshold, the similarity threshold determination unit 164 may cause the correction processing unit 165 to perform the correction process or may cause the self-correction instruction unit 166 to issue the self-correction instruction.

The correction processing unit 165 performs the correction process on an erroneous citation text in LLM output information. Specifically, the correction processing unit 165 performs the correction by replacing the erroneous citation text in the LLM output information with a segmented text having the highest similarity to the erroneous citation text. The correction processing unit 165 stores the corrected LLM output information in the corrected LLM output storage unit 127. Final corrected LLM output information is used as a final output based on RAG.

The self-correction instruction unit 166 generates a self-correction instruction prompt. The self-correction instruction prompt includes a description instructing the LLM 150 to correct a citation text and correct an answer. The self-correction instruction prompt includes the previous answer generated by the LLM 150 and a description pointing out the erroneous citation text. The self-correction instruction prompt also includes texts that are candidates for a citation portion from the source document.

The information processing apparatus 100 performs the following processing procedure.

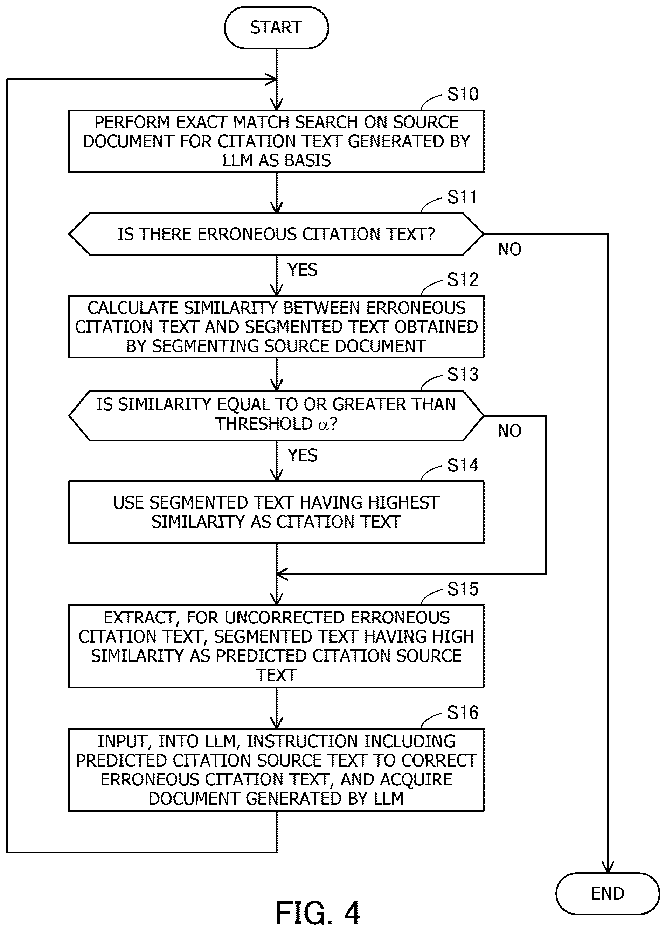

FIG. 4 is a flowchart illustrating an example of a process performed by the information processing apparatus. The following procedure is started when LLM output information in response to LLM input data based on an initial prompt is stored in the LLM output storage unit 123.

(S10) The erroneous citation text extraction unit 162 performs an exact match search on a source document for a citation text generated by the LLM 150 as a basis. The citation text is included in the LLM output information. The LLM output information may include a plurality of citation texts.

(S11) The erroneous citation text extraction unit 162 determines whether there is an erroneous citation text. If an erroneous citation text is found, the process proceeds to step S12. If no erroneous citation text is found, the process is completed. If the exact match search in step S10 results in finding, for all citation texts, corresponding texts in the source document that exactly match the respective citation texts, the erroneous citation text extraction unit 162 determines that there is no erroneous citation text. If at least one citation text does not exactly match any text in the source document, the erroneous citation text extraction unit 162 determines that there is an erroneous citation text. Then, the erroneous citation text extraction unit 162 stores at least one erroneous citation text in the erroneous citation text storage unit 124.

(S12) The similarity calculation unit 163 calculates the similarity between the erroneous citation text and a segmented text obtained by segmenting the source document. The similarity calculation unit 163 registers the calculated similarity in the similarity-related data stored in the similarity-related data storage unit 125. Before step S12, the text segmentation unit 161 generates segmented texts based on the source document and stores the segmented texts in the segmented text storage unit 122. Note that a plurality of segmented texts are generated. The similarity calculation unit 163 calculates the similarity between the erroneous citation text and each of the plurality of segmented texts. In the case where a plurality of erroneous citation texts are found, the similarity calculation unit 163 calculates, for each erroneous citation text, the similarity between that erroneous citation text and each segmented text.

(S13) The similarity threshold determination unit 164 determines whether the similarity is equal to or greater than a threshold α. The similarity threshold determination unit 164 performs this determination of step S13 for each erroneous citation text. Specifically, the similarity threshold determination unit 164 performs, for each erroneous citation text, a process of identifying the highest similarity among the similarities between that erroneous citation text and the plurality of segmented texts and comparing the highest similarity with the threshold α. If the highest similarity for a certain erroneous citation text is equal to or higher than the threshold α, the similarity threshold determination unit 164 advances the process to step S14 for the erroneous citation text. On the other hand, if the highest similarity for a certain erroneous citation text is smaller than the threshold α, the similarity threshold determination unit 164 advances the process to step S15 for the erroneous citation text.

(S14) The correction processing unit 165 uses the segmented text having the highest similarity to the erroneous citation text as a citation text. That is, the correction processing unit 165 performs a correction by replacing the erroneous citation text included in the LLM output information with the segmented text having the highest similarity to the erroneous citation text. The correction processing unit 165 stores the corrected LLM output information in the corrected LLM output storage unit 127. Then, the process proceeds to step S15.

(S15) The self-correction instruction unit 166 extracts, for an uncorrected erroneous citation text, a segmented text having a high similarity as a predicted citation source text. For example, the self-correction instruction unit 166 sets, as the predicted citation source text, one or more segmented texts in descending order of similarity to the uncorrected erroneous citation text. In addition to selecting the one or more first predicted citation source texts based on the similarity, the self-correction instruction unit 166 may randomly extract a second predicted citation source text from segmented texts different from the first predicted citation source texts. The predicted citation source text is a candidate for a citation portion from the source document. That is, a predicted citation source text may be referred to as a candidate text.

(S16) The self-correction instruction unit 166 inputs, into the LLM 150, an instruction including the predicted citation source text to correct the erroneous citation text. The self-correction instruction unit 166 acquires a document generated by the LLM 150, that is, LLM output information. Then, the process proceeds to step S10.

If no erroneous citation text is found in step S11, final LLM output information stored in the corrected LLM output storage unit 127 is output as a final result for the task specified by the initial prompt.

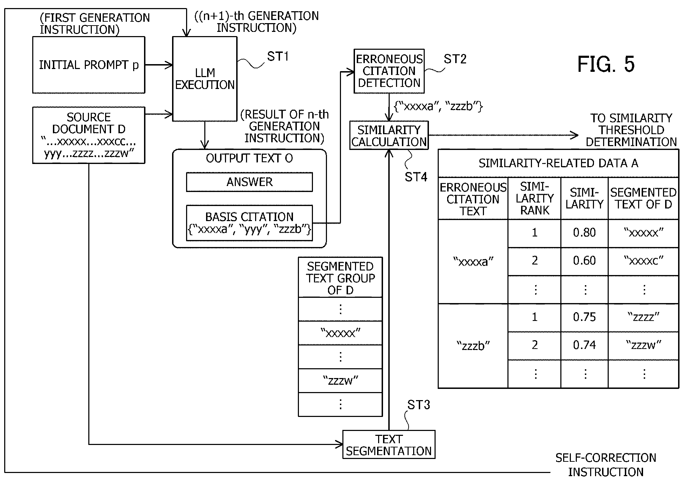

FIG. 5 illustrates the first half of a specific example of the process performed by the information processing apparatus. The LLM execution unit 140 inputs a prompt and a source document D into the LLM 150, to cause the LLM 150 to generate an output text O (step ST1). The output text O corresponds to the above-described LLM output information.

In the first (n = 1) generation instruction, an initial prompt p is input into the LLM 150. The initial prompt p is input by a user, for example. The initial prompt p may be input from another information processing apparatus to the information processing apparatus 100 via the network 114. The initial prompt p may be input to the information processing apparatus 100 by the input device 112.

The source document D includes a description "...xxxxx...xxxcc...yyy...zzzz...zzzw". The output text O includes an answer and a basis citation for the answer. The basis citation is a citation text cited from the source document D by the LLM 150, and is a citation text serving as s basis for the answer included in the output text O. For example, it is assumed that the first (n = 1) output text O includes basis citations {"xxxxa", "yyy", "zzzb"}.

The erroneous citation text extraction unit 162 performs erroneous citation detection by searching the source document D for a text that exactly matches a citation text included in the output text O (step ST2). If the source document D does not include any text that exactly matches the citation text, the erroneous citation text extraction unit 162 sets the citation text as an erroneous citation text. In this example, the erroneous citation text extraction unit 162 extracts citation texts {"xxxxa", "zzzb"} as erroneous citation texts from among the citation texts {"xxxxa", "yyy", "zzzb"}.

The text segmentation unit 161 generates a segmented text group by performing text segmentation on the source document D (step ST3). For example, the segmented text group is {..., "xxxxx", ..., "zzzw", ...}. The text segmentation by the text segmentation unit 161 only needs to be performed before step ST4. Once the segmented text group is generated for the source document D, the generated segmented text group may be used in the subsequent processing. Therefore, once step ST3 is executed for the source document D, step ST3 may be omitted for the source document D.

The similarity calculation unit 163 calculates the similarity between an erroneous citation text and a segmented text, and registers the similarity in similarity-related data A (step ST4). For example, the similarity-related data A includes the following items: Erroneous Citation Text, Similarity Rank, Similarity, and Segmented Text of D. The Erroneous Citation Text item contains an erroneous citation text. The Similarity Rank item contains a similarity rank. The similarity rank indicates a position, in descending order of similarity, of the similarity corresponding to a record of interest among the similarities calculated with respect to the erroneous citation text. The Similarity item contains the similarity between the erroneous citation text and a segmented text. The Segmented Text of D item contains the segmented text used for calculating the similarity.

For example, the similarity-related data A includes a record with Similarity Rank "1" and Similarity "0.80" between the erroneous citation text "xxxxa" and the segmented text "xxxxx". The similarity-related data A also includes a record with Similarity Rank "2" and Similarity "0.60" between the erroneous citation text "xxxxa" and the segmented text "xxxxc". The similarity-related data A includes records indicating the similarities between the erroneous citation text "xxxxa" and other segmented texts.

In addition, the similarity-related data A includes a record with Similarity Rank "1" and Similarity "0.75" between the erroneous citation text "zzzb" and the segmented text "zzzz". The similarity-related data A also includes a record with Similarity Rank "2" and Similarity "0.74" between the erroneous citation text "zzzb" and the segmented text "zzzw". The similarity-related data A includes records indicating the similarities between the erroneous citation text "zzzb" and other segmented texts.

Then, the process proceeds to similarity threshold determination.

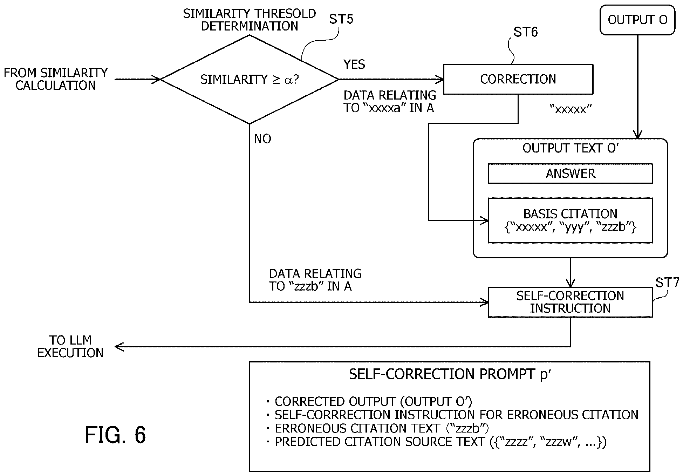

FIG. 6 illustrates the second half of the specific example of the process performed by the information processing apparatus. The similarity threshold determination unit 164 extracts the similarity corresponding to the similarity rank "1" for each erroneous citation text from the similarity-related data A, and determines whether the similarity is equal to or greater than the threshold α (step ST5).

For example, the similarity threshold determination unit 164 determines, for the data relating to the erroneous citation text "xxxxa" in the similarity-related data A, that the similarity "0.80" ≥ α. Then, the similarity threshold determination unit 164 determines to cause the correction processing unit 165 to perform the correction process on the erroneous citation text "xxxxa".

In addition, the similarity threshold determination unit 164 determines, for the data relating to the erroneous citation text "zzzb" in the similarity-related data A, that the similarity "0.75" < α. Then, the similarity threshold determination unit 164 determines to cause the self-correction instruction unit 166 to issue a self-correction instruction for the erroneous citation text "zzzb".

The correction processing unit 165 acquires, from the similarity-related data A, the segmented text "xxxxx" having the similarity rank "1" with respect to the erroneous citation text "xxxxa". The correction processing unit 165 corrects the output text O using the segmented text "xxxxx" to generate an output text O' (step ST6). Specifically, the correction processing unit 165 replaces the basis citation "xxxxa" among the basis citations {"xxxxa", "yyy", "zzzb"} in the output text O with the segmented text "xxxxx", thereby obtaining output text O'.

The self-correction instruction unit 166 issues a self-correction instruction to the LLM 150 for the erroneous citation text "zzzb" (step ST7). Specifically, the self-correction instruction unit 166 generates a self-correction instruction prompt p'. The self-correction instruction prompt p' includes the corrected output text O', a self-correction instruction for the erroneous citation, the erroneous citation text "zzzb", and predicted citation source texts {"zzzz", "zzzw", ...}. Then, the process proceeds to LLM execution in step ST1. The self-correction instruction prompt p' is taken as an (n + 1)-th generation instruction. In step ST1, n + 1 is set as a new n, and a result of the n-th generation instruction is obtained. Thereafter, steps ST2, ST4, ST5, and ... are repeatedly executed until no erroneous citation is detected in step ST2.

Next, the process of the information processing apparatus 100 will be described more specifically. Symbols used in the following description are defined as follows. A symbol d_i denotes a segmented text generated by segmenting the source document D. A symbol i is an identification number of the segmented text. As an example, it is assumed that the number of source documents is one. Note that there may be a plurality of source documents. In the case where a plurality of source documents are present, for example, an ID that uniquely identifies a file on a per-source-document basis is assigned to the file. The ID of a file is, for example, a file name. The information processing apparatus 100 causes the LLM 150 to cite a basis together with the ID of a file, and for each file ID, performs the correction process or issues a self-correction instruction.

The initial prompt p includes an instruction to conduct a task with reference to the source document D and to output an answer and a basis e_j in a machine-readable format. The basis e_j corresponds to a citation text. j is the identification number of the basis.

An input text I is a text that is input into the LLM 150. The input text I includes the source document D and the initial prompt p. The input text I corresponds to initial LLM input data.

An input text I' is a text that is input into the LLM 150. The input text I' includes the source document D, the initial prompt p, and a self-correction instruction prompt p'.

The output text O is a text output from the LLM 150. The output text O includes an answer and a basis e_j in a machine-readable format.

The output text O' is a text obtained by correcting the output text O by the correction processing unit 165.

A symbol s_{i, j'} denotes the similarity between a segmented text d_i and an erroneously cited basis e_j'. 0 ≤ s_{i, j'} ≤ 1. In this example, the similarity is calculated based on the Levenshtein distance. The similarity may be calculated using another method such as embedding representations. The erroneously cited basis e_j' corresponds to an erroneous citation text.

The self-correction instruction prompt p' includes the erroneously cited basis e_j', a predicted citation source text d_i' having the similarity rank "1" with respect to e_j', and an instruction to correct the erroneous citation. The predicted citation source text d_i' is inserted into the self-correction instruction prompt p' as reference information for correction of a citation error generated by the LLM 150. A plurality of predicted citation source texts d_i' may be inserted. For example, the self-correction instruction unit 166 may set, as predicted citation source texts, k segmented texts in descending order of the similarity rank with respect to j'. Further, the self-correction instruction unit 166 may add a predicted citation source text randomly selected from a segmented text group to the self-correction instruction prompt p'.

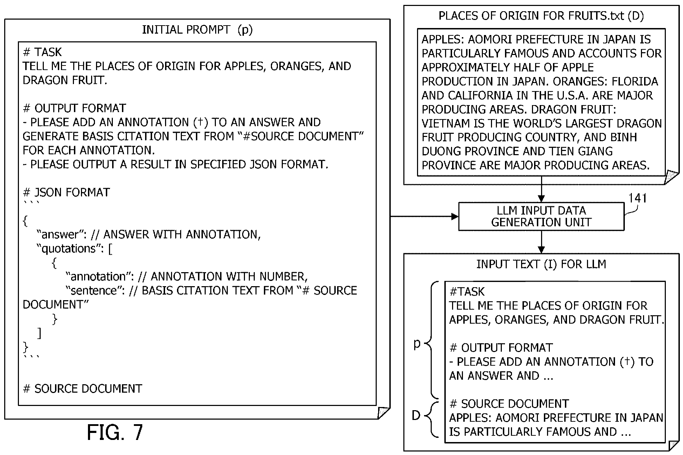

FIG. 7 illustrates an example of generating LLM input data. An initial prompt p includes the following items: Task, Output Format, a JavaScript (registered trademark) object notation (JSON) format, and Source Document. Each item is identified by a sharp symbol "#" at the head of a line and a character string such as "TASK" following "#".

The Task item describes the content of a question. In the present example, the Task item describes a question "Tell me the places of origin for apples, oranges, and dragon fruit."

The Output Format item describes instructions that specify an output format for the LLM 150. In this example, the Output Format item describes instructions "Please add an annotation (†) to an answer and generate a basis citation text from "# Source Document" for each annotation." and "Please output a result in specified JSON format."

The JSON Format item describes a JSON data format for an output of the LLM 150. The JSON format is an example of a machine-readable data format. This JSON Format item specifies a data format for outputting an answer and a basis citation portion within a source document corresponding to an annotation in the answer in association with each other.

The Source Document item describes a source document. In this example, the file name of a source document D is "Places of origin for fruits.text". The source document D includes a description "Apples: Aomori prefecture in Japan is particularly famous and accounts for approximately half of apple production in Japan. Oranges: Florida and California in the U.S.A. are major producing areas. Dragon fruit: Vietnam is the world's largest dragon fruit producing country, and Binh Duong Province and Tien Giang Province are major producing areas."

The LLM input data generation unit 141 generates an input text I for the LLM by inserting the source document D into the Source Document item of the initial prompt p. The input text I includes the initial prompt p and the source document D.

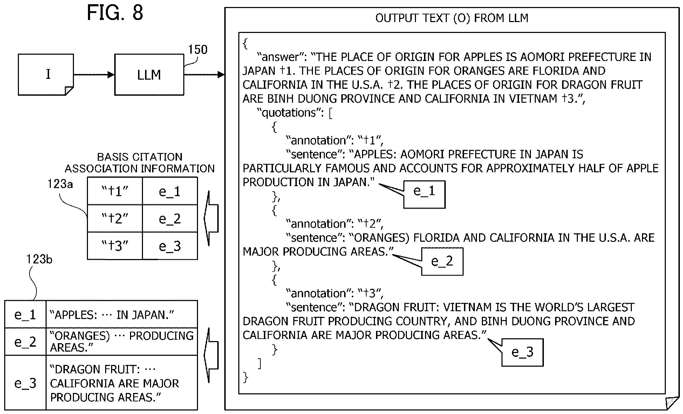

FIG. 8 illustrates an example of an output text from the LLM. The LLM execution unit 140 acquires the input text I from the LLM input data generation unit 141 and inputs the input text I into the LLM 150. The LLM 150 generates an output text O in response to the input of the input text I.

The output text O includes an answer to the task specified in the input text I. For example, the answer is described in an "Answer" item, which is specified in the JSON format item of the input text I. The answer is, for example, a text stating "The place of origin for apples is Aomori Prefecture in Japan †1. The places of origin for oranges are Florida and California in the U.S.A. †2. The places of origin for dragon fruit are Binh Duong Province and California in Vietnam †3."

The output text O also includes bases e_1, e_2, and e_3. The bases e_1, e_2, and e_3 are described in a "Sentence" item. The "Sentence" item is associated with an annotation in the answer, which is specified in an "Annotation" item. In the example of the output text O, the annotation "†1" is associated with the basis e_1. The annotation "†2" is associated with the basis e_2. The annotation "†3" is associated with the basis e_3.

The basis e_1 is a citation text stating "Apples: Aomori prefecture in Japan is particularly famous and accounts for approximately half of apple production in Japan." The basis e_2 is a citation text stating "Oranges) Florida and California in the U.S.A. are major producing areas." The basis e_3 is a citation text stating "Dragon Fruit: Vietnam is the world's largest dragon fruit producing country, and Binh Duong Province and California are major producing areas."

Basis citation association information 123a indicates correspondences between the annotations (†1, †2, and †3) in the answer and the bases e_1, e_2, and e_3. Basis information 123b indicates a text corresponding to each basis e_1, e_2, and e_3.The basis citation association information 123a and the basis information 123b may be generated based on the output text O by, for example, the erroneous citation text extraction unit 162 and stored in the LLM output storage unit 123.

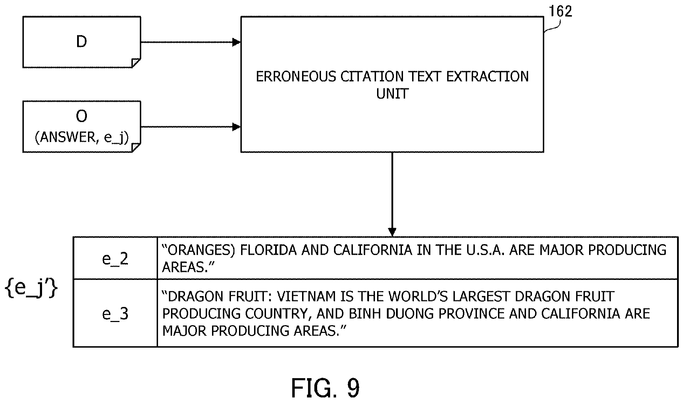

FIG. 9 illustrates an example of erroneous citation text extraction. Based on the source document D and the output text O, the erroneous citation text extraction unit 162 extracts an erroneously cited basis e_j' from among the basis e_j included in the output text O.

Specifically, the erroneous citation text extraction unit 162 searches the source document D for a text that exactly matches the basis e_1. The source document D includes a text that exactly matches the basis e_1. Therefore, the erroneous citation text extraction unit 162 determines that the basis e_1 has been appropriately cited.

The erroneous citation text extraction unit 162 searches the source document D for a text that exactly matches the basis e_2. The source document D does not include any text that exactly matches the basis e_2. Therefore, the erroneous citation text extraction unit 162 determines that the basis e_2 has been erroneously cited.

The text of e_2 is "Oranges) Florida ..." On the other hand, the source document D includes a text "Oranges: Florida ..." That is, the colon symbol ":" in this portion of the source document D has been changed to a right parenthesis symbol ")" in the text of e_2.

The erroneous citation text extraction unit 162 searches the source document D for a text that exactly matches the basis e_3. The source document D does not include any text that exactly matches the basis e_3. Therefore, the erroneous citation text extraction unit 162 determines that the basis e_3 has been erroneously cited.

The text of e_3 is "... California are major producing areas. The source document D includes a text "... Tien Giang Province are major producing areas." That is, "Tien Giang Province" in this portion of the source document D has been changed to "California" in the text of e_3.

In this manner, the erroneous citation text extraction unit 162 extracts the erroneously cited bases {e_j'} = {e_2, e_3} from among {e_j} = {e_1, e_2, e_3}.

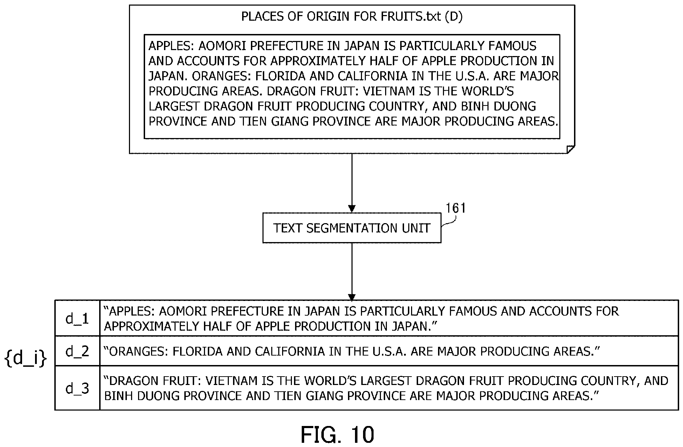

FIG. 10 illustrates an example of text segmentation. The text segmentation unit 161 segments the source document D into sentence-based units, for example, and generates a segmented text group {d_i} = {d_1, d_2, d_3}. A segmented text d_1 states "Apples: Aomori prefecture in Japan is particularly famous and accounts for approximately half of apple production in Japan." A segmented text d_2 is "Oranges: Florida and California in the U.S.A. are major producing areas." A segmented text d_3 is "Dragon Fruit: Vietnam is the world's largest dragon fruit producing country, and Binh Duong Province and Tien Giang Province are major producing areas."

The text segmentation unit 161 may use, for example, GiNZA as a tool for segmenting the source document D. Further, due to characteristics of the LLM 150, e_j' is not necessarily limited to a single sentence. Therefore, the text segmentation unit 161 may generate segmented texts based not only on sentences but also on chunks such as "two to N sentences", "one to five words", or the like, and may use such segmented texts in subsequent similarity calculation.

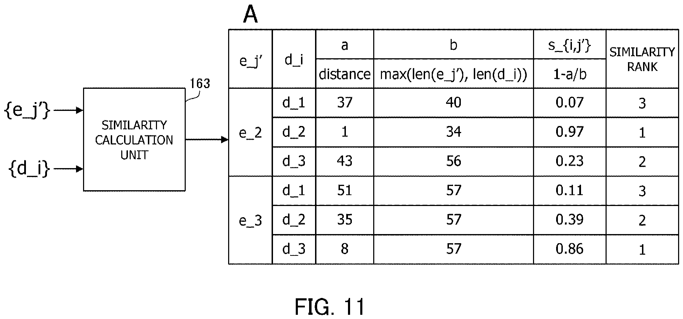

FIG. 11 illustrates an example of similarity calculation. The similarity calculation unit 163 calculates the similarity s_{i, j'} between the erroneously cited basis group {e_j'} and the segmented text group {d_i}. The similarity calculation unit 163 registers the calculated similarity s_{i, j'} in the similarity-related data A.

Here, the similarity calculation unit 163 calculates the similarity s_{i, j'} based on the Levenshtein distance between (e_j', d_i). Specifically, s_{i, j'} = 1 - a/b. Here, a denotes the Levenshtein distance. In FIG. 11, the Levenshtein distance is denoted as distance. b = max(len(e_j'), len(d_i)), where max(x, y) is a function that returns a larger one of x and y, len(z) is a function that returns the length of a character string z. The similarity-related data A may include a calculation result of a = distance and b.

The similarity-related data A includes a record indicating a similarity s_{i, j'} and a similarity rank, for each pair of e_j' and d_i. For example, s_{1, 2} = 0.07. s_{2, 2} = 0.97. s_{3, 2} = 0.23. Therefore, for j' = 2, s_{2, 2} has the similarity rank "1".

Also, s_{1, 3} = 0.11. s_{2, 3} = 0.39. s_{3, 3} = 0.86. Therefore, for j' = 3, s_{3, 3} has the similarity rank "1".

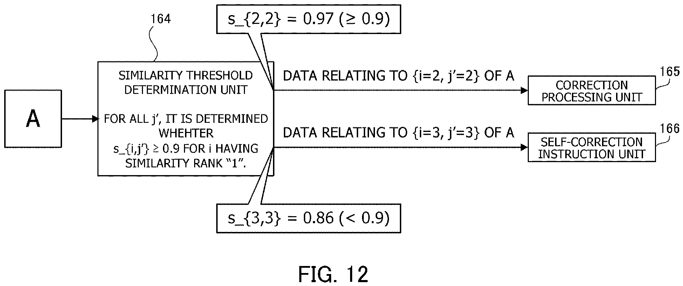

FIG. 12 illustrates an example of similarity threshold determination. The similarity threshold determination unit 164 performs similarity threshold determination based on the similarity-related data A. As an example, it is assumed that the similarity threshold α is set to 0.9. For all j', the similarity threshold determination unit 164 determines whether s_{i, j'} ≥ 0.9 is satisfied for i having the similarity rank "1".

If s_{i, j'} ≥ 0.9 is satisfied, the similarity threshold determination unit 164 causes the correction processing unit 165 to perform the correction process on e_j'. If s_{i, j'} < 0.9 is satisfied, the similarity threshold determination unit 164 causes the self-correction instruction unit 166 to issue a self-correction instruction for e_j'.

Specifically, s_{2, 2} = 0.97 ≥ 0.9. Therefore, the similarity threshold determination unit 164 causes the correction processing unit 165 to perform the correction process on e_2. At this time, the similarity threshold determination unit 164 may give data relating to {i = 2, j' = 2} included in the similarity-related data A to the correction processing unit 165.

Also, s_{3, 3} = 0.86 < 0.9. Therefore, the similarity threshold determination unit 164 causes the self-correction instruction unit 166 to issue a self-correction instruction for e_3.At this time, the similarity threshold determination unit 164 may give data relating to {i = 3, j' = 3} included in the similarity-related data A to the self-correction instruction unit 166.

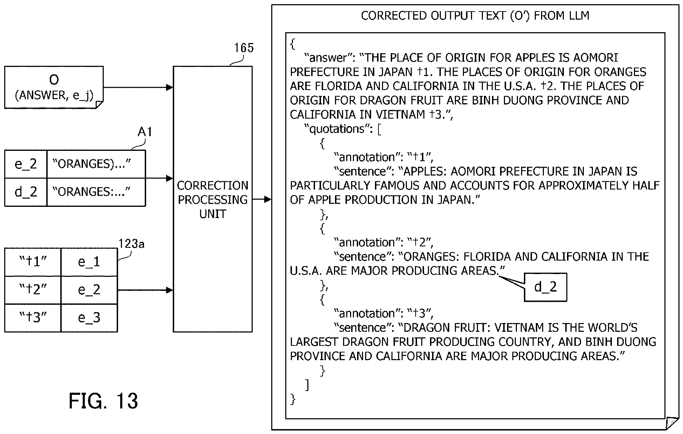

FIG. 13 illustrates an example of the correction process. The correction processing unit 165 performs the correction process on the basis e_2 included in the output text O. Specifically, the correction processing unit 165 acquires the output text O, data A1 regarding e_2 and d_2 included in the similarity-related data A, and the basis citation association information 123a. Based on the basis citation association information 123a, the correction processing unit 165 identifies the annotation "†2" corresponding to e_2 of the data A1 and identifies, in the output text O, a portion describing e_2 corresponding to the annotation "†2". The correction processing unit 165 performs a correction by replacing the portion describing e_2 in the output text O with the text of d_2. Thus, the correction processing unit 165 generates a corrected output text O'.

By the above correction process, the erroneous portion "Oranges) Florida ..." included in the text of e_2 in the output text O is corrected to an appropriate description "Oranges: Florida ..." that appears in the source document D.

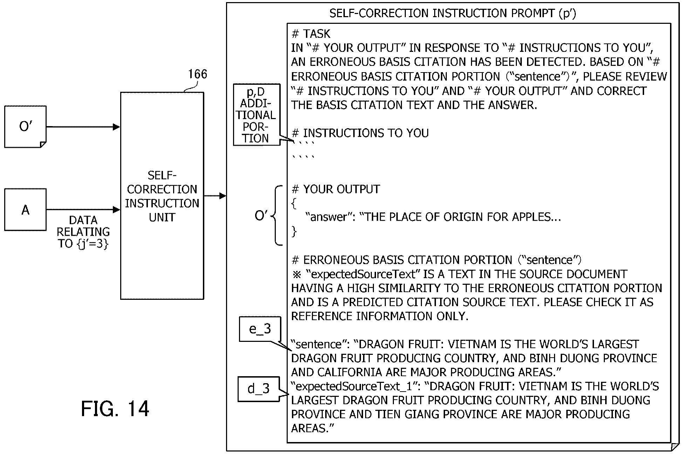

FIG. 14 illustrates a first example of a self-correction instruction. The self-correction instruction unit 166 issues a self-correction instruction for the basis e_3 included in the output text O. Specifically, the self-correction instruction unit 166 generates a self-correction instruction prompt p' based on the output text O' and data relating to {j' = 3} included in the similarity-related data A.

The self-correction instruction prompt p' includes the following items: Task, Instructions to You, Your Output, and Erroneous Basis Citation Portion ("sentence"). Each item is identified by a sharp symbol "#" at the head of a line and a character string such as "TASK" following #.

The Task item describes the content of a self-correction instruction for the LLM 150. In this example, the Task item describes a self-correction instruction stating "In "# Your Output" in response to "# Instructions to You", an erroneous basis citation has been detected. Based on "# Erroneous Basis Citation Portion ("sentence"), please review "# Instructions to You" and "# Your Output" and correct the basis citation text and the answer." Here, "You" in the self-correction instruction prompt p' refers to the LLM 150.

The Instructions to You item is a portion in which the initial prompt p and the source document D are additionally placed. The initial prompt p and the source document D are added to the self-correction instruction prompt p' by the LLM input data generation unit 141.

The Your Output item includes the corrected output text O'.

The Erroneous Basis Citation Portion ("sentence") item describes the erroneous citation text that is a target for the self-correction instruction and a predicted citation source text in the source document D that is predicted to be a proper citation portion. For example, the Erroneous Basis Citation Portion ("sentence") item includes an instruction to the LLM 150 stating ""expectedSourceText" is a text in the source document having a high similarity to the erroneous basis citation portion and is a predicted citation source text. Please check it as reference information only."

The basis e_3 is described in "sentence" in the Erroneous Basis Citation Portion ("sentence") item. e_3 is a text stating "Dragon Fruit: Vietnam is the world's largest dragon fruit producing country, and Binh Duong Province and California are major producing areas."

Further, for j' = 3, s_{3, 3} has the similarity rank "1". Therefore, the segmented text d_3 is described in "expectedSourceText_1" in the Erroneous Basis Citation Portion ("sentence") item. d_3 is a text stating "Dragon fruit: Vietnam is the world's largest dragon fruit producing country, and Binh Duong Province and Tien Giang Province are major producing areas."

In the case where the correction process by the correction processing unit 165 is not performed on the output text O, the self-correction instruction unit 166 generates the self-correction instructing prompt p' using the output text O instead of the output text O'.

Here, "_1" in "expectedSourceText_1" of the self-correction instruction prompt p' indicates that the text is a first predicted citation source text. The self-correction instruction prompt p' may include a plurality of predicted citation source texts.

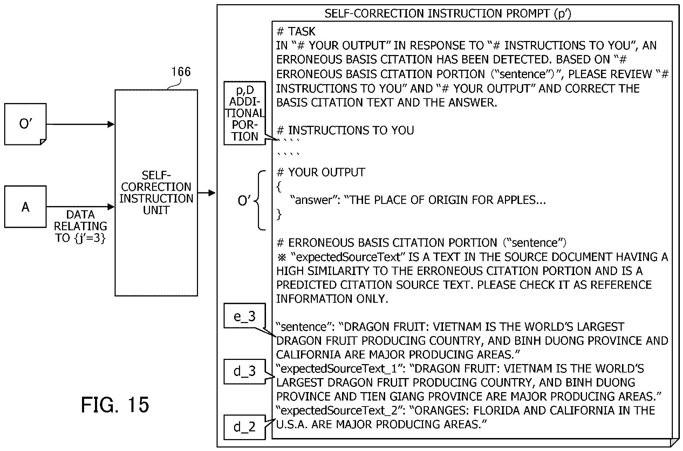

FIG. 15 illustrates a second example of a self-correction instruction. The self-correction instruction prompt p' may include, as predicted citation source texts, segmented texts with the top k similarity ranks. k is an integer of 1 or more. In the example of FIG. 15, k = 2. For j' = 3, s_{2, 3} has a similarity rank "2".

In this case, the self-correction instruction unit 166 inserts the text of d_2 as "expectedSourceText_2" into the Erroneous Basis Citation Portion ("sentence") item, in addition to the text of d_3 as "expectedSourceText_1". d_2 is a text stating "Oranges: Florida and California in the U.S.A. are major producing areas." It is expected that describing segmented texts with high similarity ranks as predicted citation source texts in the self-correction instruction prompt p' improves the accuracy of correction made by the LLM 150.

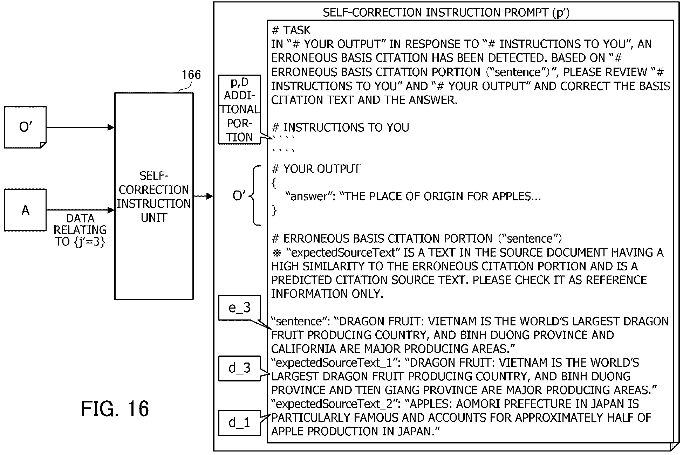

FIG. 16 illustrates a third example of a self-correction instruction. The self-correction instruction prompt p' may include, in addition to the segmented texts with the top k similarity ranks, l segmented texts randomly selected as predicted citation source texts. Here, l is an integer of 1 or more. In the example of FIG. 16, it is assumed that k = 1 and l = 1.

In this case, the self-correction instruction unit 166 randomly selects one (= l) segmented text from the segmented texts d_1 and d_2 excluding the top one (= k) segmented text d_3 in the segmented text group {d_i}. As an example, it is assumed that the segmented text d_1 is selected.

Then, the self-correction instruction unit 166 inserts the text of d_1 as "expectedSourceText_2" into the Erroneous Basis Citation Portion ("sentence") item, in addition to the text of d_3 as "expectedSourceText_1". d_1 is a text stating "Apples: Aomori prefecture in Japan is particularly famous and accounts for approximately half of apple production in Japan." It is expected that describing a randomly selected segmented text as a predicted citation source text in the self-correction instruction prompt p' in addition to segmented texts with high similarity ranks improves the accuracy of correction made by the LLM 150.

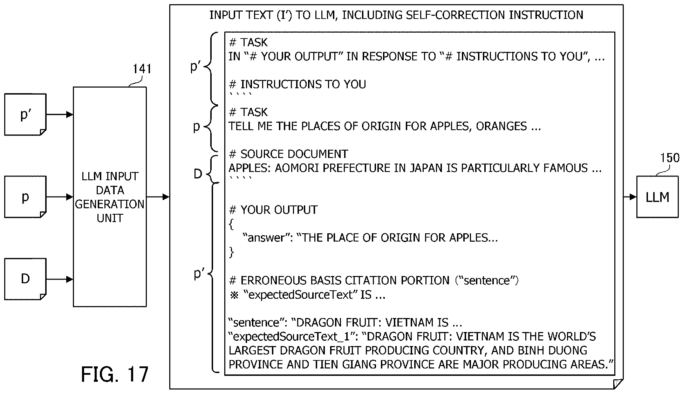

FIG. 17 illustrates an example of generating LLM input data based on a self-correction instruction. The LLM input data generation unit 141 generates an input text I' based on a self-correction instruction prompt p', the initial prompt p, and the source document D. Specifically, the LLM input data generation unit 141 generates the input text I' by inserting the initial prompt p and the source document D into the self-correction instruction prompt p'. The input text I' is input into the LLM 150 via the LLM execution unit 140.

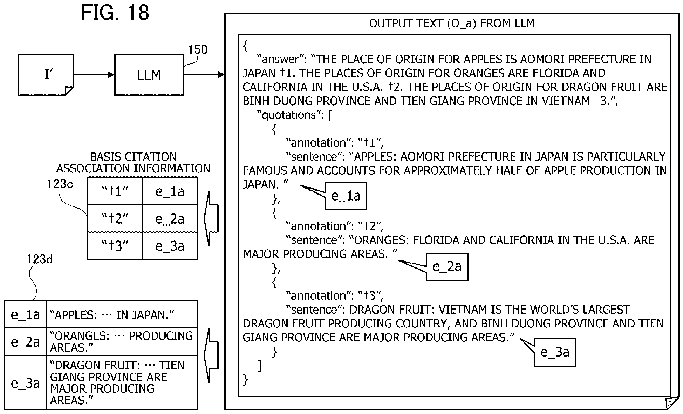

FIG. 18 illustrates an example of an output text output from the LLM and reflecting a self-correction instruction. The LLM 150 generates an output text O_a for the input of the input text I'.

The output text O_a includes an answer to a task specified by the input text I'. The task specified by the input text I' includes a self-correction instruction in addition to the task specified by the initial prompt p. Therefore, the answer in the output text O_a reflects the self-correction instruction. For example, the answer is described in an "Answer" item. The answer is, for example, a text stating "The place of origin for apples is Aomori Prefecture in Japan †1. The places of origin for oranges are Florida and California in the U.S.A. †2. The places of origin for dragon fruit are Binh Duong Province and Tien Giang Province in Vietnam †3."

The output text O_a also includes bases e_1a, e_2a, and e_3a. The bases e_1a, e_2a, and e_3a are described in the "Sentence" item. The "Sentence" item is associated with an annotation in the answer, which is specified in an "Annotation" item. In the example of the output text O_a, the annotation "†1" is associated with the basis e_1a. The annotation "†2" is associated with the basis e_2a. The annotation "†3" is associated with the basis e_3a.

The basis e_1a is a citation text stating "Apples: Aomori prefecture in Japan is particularly famous and accounts for approximately half of apple production in Japan." The basis e_2a is a citation text stating "Oranges: Florida and California in the U.S.A. are major producing areas." The basis e_3a is a citation text stating "Dragon fruit: Vietnam is the world's largest dragon fruit producing country, and Binh Duong Province and Tien Giang Province are major producing areas."

Basis citation association information 123c indicates the correspondences between the annotations (†1, †2, and †3) in the answer and the bases e_1a, e_2a, and e_3a. Basis information 123d indicates a text corresponding to each of the bases e_1a, e_2a, and e_3a. For example, the basis citation association information 123c and the basis information 123d may be generated by the erroneous citation text extraction unit 162 on the basis of the output text O_a and stored in the LLM output storage unit 123.

Note that, in the output text O_a, the basis e_1a is the same as the segmented text d_1. The basis e_2a is the same as the segmented text d_2. The basis e_3a is the same as the segmented text d_3.

In the example of the output text O_a, the content of the annotation "†3" in the answer is corrected as a result of the self-correction of the basis e_3a by the LLM 150. Specifically, in the output text O, the answer corresponding to the annotation "†3" has a text stating "The places of origin for dragon fruit are Binh Duong Province and California in Vietnam †3."

On the other hand, in the output text O_a, the answer corresponding to the annotation "†3" has a text stating "The places of origin for dragon fruit are Binh Duong Province and Tien Giang Province in Vietnam †3." That is, "California" has been corrected to "Tien Giang Province". In this manner, the answer is also expected to be corrected to appropriate content based on the appropriate basis e_3a by the LLM 150.

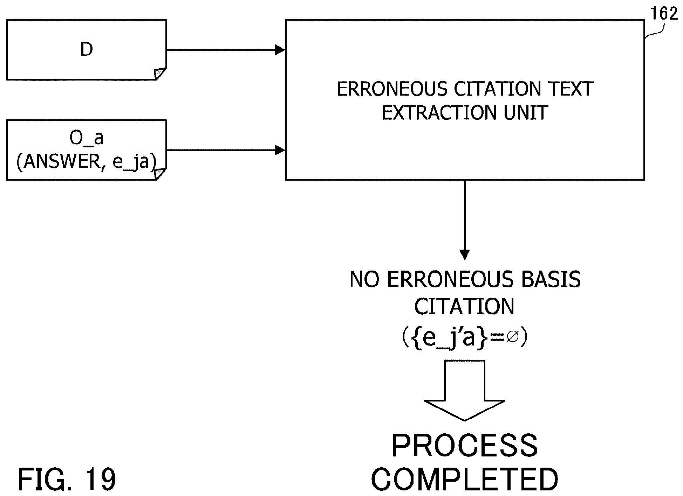

FIG. 19 illustrates an example of process completion determination. The erroneous citation text extraction unit 162 performs erroneous citation text extraction based on the source document D and the output text O_a. Specifically, the erroneous citation text extraction unit 162 searches the source document D for a text that exactly matches the basis e_1a. The source document D includes the text d_1 that exactly matches the basis e_1a. Therefore, the erroneous citation text extraction unit 162 determines that the basis e_1a is appropriately cited.

The erroneous citation text extraction unit 162 searches the source document D for a text that exactly matches the basis e_2a. The source document D includes the text d_2 that exactly matches the basis e_2a. Therefore, the erroneous citation text extraction unit 162 determines that the basis e_2a is appropriately cited.

The erroneous citation text extraction unit 162 searches the source document D for a text that exactly matches the basis e_3a. The source document D includes the text d_3 that exactly matches the basis e_3a. Therefore, the erroneous citation text extraction unit 162 determines that the basis e_3a is appropriately cited.

As a result, the erroneous citation text extraction unit 162 determines that the output text O_a includes no erroneous basis citation, that is, {e_j' a} = φ. Here, {e_j' a} indicates a set of erroneously cited bases among {e_ja} (j = 1, 2, 3). φ denotes an empty set. That is, {e_j'} = φ indicates that no basis is erroneously cited.

Therefore, the output text O_a is output as a final result. For example, the RAG system control unit 130 may transmit, via the network 114, the output text O_a to the information processing apparatus that has transmitted the initial prompt p. The RAG system control unit 130 may display the output text O_a on the display 111.

In this way, the information processing apparatus 100 provides the user with the final output text O_a after the correction process and the self-correction performed by the LLM 150 for the initial prompt p. As a result, the information processing apparatus 100 is able to provide the user with an appropriate answer without erroneous citations. The user is able to identify portions of the source document D describing the basis for the answer of the LLM 150 by using, in the source document D, the texts exactly matching the basis, so as to efficiently verify the answer of the LLM 150.

The following describes a specific example in which confirmation of the implementation of security operations of a computer system is made more efficient by using the LLM 150.

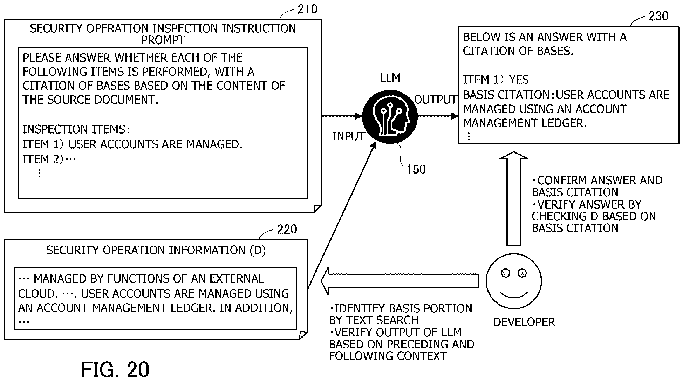

FIG. 20 illustrates an example of utilization of a basis citation. For example, a human developer inputs security operation information 220 as a source document D into the LLM 150 along with a security operation inspection instruction prompt 210.

The security operation inspection instruction prompt 210 includes the following description.

"Please answer whether each of the following items is performed, with a citation of bases based on the content of the source document.

### Inspection Items:

Item 1) User accounts are managed.
Item 2) ..."

The security operation information 220 includes a description stating "... managed by functions of an external cloud..... User accounts are managed using an account management ledger. In addition, ..."

For example, the security operation inspection instruction prompt 210 specifies the security operation information 220 as the source document.

In response to the inputs of the security operation inspection instruction prompt 210 and the security operation information 220, the LLM 150 outputs an output text 230. The output text 230 is an example of a preferred output by the LLM 150. For example, even if an initial output text generated by the LLM 150 includes an erroneous citation, the information processing apparatus 100 is able to obtain the appropriate output text 230 by correcting the erroneous citation in the output text or by issuing a self-correction instruction to the LLM 150. The output text 230 includes the following description:
"Below is an answer with a citation of bases.
Item 1) Yes
Basis citation: User accounts are managed using an account management ledger. ..."

By referring to the output text 230, the developer of the computer system is able to confirm the answer generated by the LLM 150 and the basis citation corresponding to the answer. In addition, the developer is able to verify the answer of the LLM 150 by checking the source document D, that is, the security operation information 220 based on the basis citation.

For example, the developer is able to efficiently identify a basis portion that matches the basis citation from the security operation information 220 by text search or the like. The developer is able to verify the output of the LLM 150 based on the context before and after the basis portion in the security operation information 220.

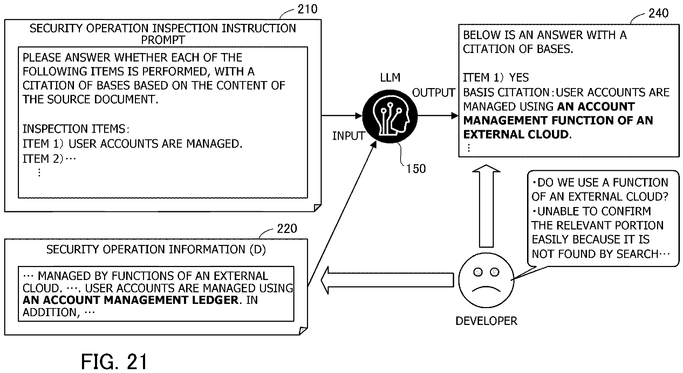

FIG. 21 illustrates an example of an erroneous basis citation. An output text 240 is an example of an output including an erroneous citation generated by the LLM 150 in response to the inputs of the security operation inspection instruction prompt 210 and the security operation information 220. The output text 240 includes the following description:
"Below is an answer with a citation of bases.
Item 1) Yes
Basis citation: User accounts are managed using an account management function of an external cloud. ..."

However, the security operation information 220 does not include any description indicating that user accounts are managed using an external cloud. In addition, although the security operation information 220 includes a description of an "account management ledger", it does not include any description of an "account management function" that is included in the basis citation of the output text 240.

Therefore, when referring to the output text 240, the developer may have doubts such as "Do we use a function of an external cloud?" Furthermore, the description of the basis citation does not exactly match the description in the security operation information 220. As a result, even if the developer attempts to check the basis citation portion in the security operation information 220, the developer is not able to confirm the relevant portion easily because it is not found by search.

As illustrated in FIG. 20, the information processing apparatus 100 is able to obtain the output text 230 without erroneous citations, as an output of the LLM 150, by performing the correction process or by issuing a self-correction instruction. Accordingly, the information processing apparatus 100 is able to support users such as developers in efficient verification of answers generated by the LLM 150.

In the second embodiment, an example has been described in which a basis is cited by the LLM 150 from the source document on a sentence-unit basis. However, the basis may alternatively be cited in other units, such as on a perchunk basis. A chunk is a block of text obtained by segmenting a document by a certain length. A document is divided into a plurality of chunks. A chunk may also be regarded as a group of one or more sentences described in the document.

LongCite is a comparative example in which the LLM 150 is caused to present a basis for an answer. LongCite is a technique that assigns sentence numbers on a per-sentence basis to a source document as preprocessing and causes the LLM 150 to cite sentence numbers. For LongCite, the following Document 1 is informative.

Document 1: Jiajie Zhang and ten others, "LongCite: Enabling LLMs to Generate Fine-grained Citations in Longcontext QA", [online], Sep. 4, 2024, Cornell University, [searched on Mar. 7, 2025], Internet <URL: https://web3.arxiv.org/abs/2409.02897>

However, in LongCite, it is needed to add sentence numbers that do not originally exist in a source document to each sentence of the source document, for example, at the beginning of each sentence. For example, for an original source document stating "The water pollution (...) To accomplish its ...", sentence numbers <CXX> are added as in "<C01> The water pollution (...) <C22> To accomplish its ..." Therefore, in LongCite, the sentence numbers added to the source document may act as noise for the LLM 150, which may cause a decrease in the accuracy of answers and citations.

In contrast, the information processing apparatus 100 is able to eliminate the need to add sentence numbers to the source document. Therefore, the information processing apparatus 100 is able to prevent a decrease in the accuracy of answers and citations, which may occur in LongCite.

Another comparative example is Kotaemon. Kotaemon is RAB-based open source software (OSS). Kotaemon causes the LLM 150 to output a citation text, and performs a longestmatch search between the citation text and the text of chunks of the source document. Kotaemon sets, as the citation text, a portion where a match for a predetermined length or longer is found, and highlights the citation text.

However, in kotaemon, if the LLM 150 makes a citation error even a little, the basis citation is lost, and effort is still needed to confirm the validity of the basis. For example, it is assumed that a basis citation included in an output of the LLM 150 is ""AlphaFold" is scientific ..." It is also assumed that a source document includes a text stating "'AlphaFold' that ... protein is scientific ..." In this case, the LLM 150 erroneously cites the type of quotation marks. Specifically, the LLM 150 incorrectly uses double quotation marks "" instead of single quotation marks ''. In addition, in the basis citation output by the LLM 150, a text "that ... protein" after the single quotation mark in the source document is missing.

In this case, even if the user performs an exact match search on the source document for the basis citation text included in the output of the LLM 150, no search result is obtained because the source document does not include a matching text. Therefore, it takes time and effort for the user to confirm the validity of the basis output by the LLM 150. As a result, the user is unable to smoothly verify the answer generated by the LLM 150.

In contrast, the information processing apparatus 100 is able to correct an erroneous citation to an appropriate text appearing in the source document, by performing the correction process or by issuing a self-correction instruction to the LLM 150. Accordingly, the information processing apparatus 100 is able to improve the efficiency of confirming the validity of a basis output by the LLM 150. In addition, the information processing apparatus 100 is able to support the user in smoothly verifying the answer generated by the LLM 150.

As described above, the information processing apparatus 100 is able to reduce erroneous citations. As a result, the information processing apparatus 100 is able to support the user in efficiently identifying citation portions in the source document and verifying the validity of the output of the LLM 150 based on the citation portions.

Furthermore, the information processing apparatus 100 is able to control which method to prioritize, the mechanical correction not involving the LLM 150 or the self-correction by the LLM 150, by adjusting the threshold α (= predetermined value α), which is compared with the similarity. For example, by setting the threshold α to a relatively high value, the information processing apparatus 100 is able to prioritize the self-correction performed by the LLM 150 over the mechanical correction. Although the LLM 150 incurs a processing cost, the LLM 150 is able to correct erroneous citations with high accuracy based on semantic information of the context. Therefore, prioritizing the self-correction performed by the LLM 150 improves the accuracy of erroneous citation correction. On the other hand, by setting the threshold α to a relatively low value, the information processing apparatus 100 is able to prioritize the mechanical correction. By increasing the probability of performing the mechanical correction, the information processing apparatus 100 is able to prioritize a reduction in the processing cost. In this way, the information processing apparatus 100 is able to perform text extraction with a balanced trade-off between the correction accuracy and the correction cost.

As described above, the information processing apparatus 100 performs, for example, the following process. The "processor 101" described below may be read as the "processing unit 12" of the first embodiment.

The processor 101 acquires a first text output from a machine learning model as a citation portion of a source document, the citation portion serving as a basis for a document generated by the machine learning model based on the source document. The processor 101 stores the first text in the RAM 102, the HDD 103, or the like. The processor 101 extracts, from the source document, a second text having the highest similarity to the first text. The processor 101 compares the similarity between the first text and the second text with a predetermined value. If the similarity is higher than the predetermined value, the processor 101 outputs the second text as a citation portion from the source document.

Accordingly, the information processing apparatus 100 is able to reduce erroneous citations generated by the machine learning model. Note that the LLM 150 is an example of the machine learning model. An answer described in the "Answer" item of the output text O of the LLM 150 is an example of "a document generated by the machine learning model based on the source document". The threshold α is an example of the predetermined value.

The processor 101 may acquire, from the machine learning model, output information including a document generated by the machine learning model based on the source document and the first text. When outputting the second text, the processor 101 may replace the first text included in the output information with the second text, and output the output information.

Accordingly, the information processing apparatus 100 is able to present appropriately corrected output information to a user. As a result, the information processing apparatus 100 is able to support the user in efficiently identifying a citation portion in the source document and verifying the validity of the output of the LLM 150 based on the citation portion. In this connection, the output text O' and the output text O_a are examples of the output information.

If the similarity between the first text and the second text is lower than the predetermined value, the processor 101 may select, from a plurality of texts extracted from the source document, a candidate text that is a candidate for a citation portion. The processor 101 may input, into the machine learning model, a prompt including the candidate text and instructing correction of the document and the first text. The processor 101 may acquire, from the machine learning model, a third text as a citation portion of the source document serving as a basis for the document output from the machine learning model in response to the prompt.

Accordingly, the information processing apparatus 100 is able to reduce erroneous citations generated by the machine learning model. In this connection, the self-correction instruction prompt p' is an example of a "prompt instructing correction of a document and a citation portion". The input text I' into the LLM 150 including the self-correction instruction may also be regarded as an example of a "prompt instructing correction of a document and a citation portion".

If the similarity between the first text and the second text is equal to the predetermined value, the processor 101 may determine to perform the correction process without using the machine learning model or may determine to issue a self-correction instruction for correction performed by the machine learning model. Which of the correction process or the self-correction instruction is performed when the similarity between the first text and the second text is equal to the predetermined value is set in advance.

The processor 101 may select the candidate text based on the similarity between the first text and each of a plurality of texts extracted from the source document. Thus, the information processing apparatus 100 is able to improve the accuracy of citation by the machine learning model. Note that the processor 101 may select a plurality of candidate texts based on the similarity.

In addition to selecting a first candidate text based on the similarity, the processor 101 may randomly select a second candidate text from texts other than the first candidate text among the plurality of texts. By doing so, the information processing apparatus 100 is able to further improve the accuracy of citation by the machine learning model.

Upon acquiring the first text from the machine learning model, the processor 101 searches the source document for a text that exactly matches the first text. If the source document includes any text that exactly matches the first text, the processor 101 outputs the first text as a citation portion from the source document. If the source document does not include a text that exactly matches the first text, the processor 101 extracts, from the source document, a second text having the highest similarity to the first text. Accordingly, the information processing apparatus 100 is able to reduce erroneous citations generated by the machine learning model.

Furthermore, the processor 101 segments the source document into a plurality of texts, each of which is a set of one or more sentences in the source document or a set of one or more words in the source document. The processor 101 extracts the second text from the plurality of texts based on the similarity between the first text and each of the plurality of texts. Accordingly, the information processing apparatus 100 is able to appropriately extract the second text.

Note that the information processing of the first embodiment may be implemented by causing the processing unit 12 to execute a program. The information processing of the second embodiment may be implemented by causing the processor 101 to execute a program. The program may be recorded on the computer-readable recording medium 113.

For example, the program may be distributed by distributing the recording medium 113 on which the program is recorded. Alternatively, the program may be stored in another computer and distributed via a network. For example, a computer may store (install) the program recorded on the recording medium 113 or the program received from another computer in a storage device such as the RAM 102 or the HDD 103, read the program from the storage device, and execute the program.

In one aspect, erroneous citations are reduced.

## Claims

1. An information processing apparatus comprising:
storage means (11) configured to store a first text (52) output from a machine learning model (20) as a citation portion of a source document (40), the citation portion serving as a basis for a document (51) generated by the machine learning model based on the source document; and
processing means (12) configured to:
extract, from the source document, a second text having a highest similarity to the first text;
compare a similarity between the first text and the second text with a predetermined value; and
output the second text as the citation portion upon determining that the similarity is higher than the predetermined value.

2. The information processing apparatus according to claim 1, wherein
the processing means (12) is further configured to acquire output information (50) including the document (51) and the first text (52) from the machine learning model (20), and
outputting of the second text includes replacing the first text included in the output information with the second text and outputting the output information.

3. The information processing apparatus according to claim 1, wherein
the processing means (12) is further configured to, upon determining that the similarity is lower than the predetermined value:
select a candidate text that is a candidate for the citation portion, from a plurality of texts extracted from the source document (40);
input a prompt including the candidate text into the machine learning model (20), the prompt instructing the machine learning model to correct the document (51) and the first text (52); and
acquire, from the machine learning model, a third text as the citation portion serving as the basis for the document output from the machine learning model in response to the prompt.

4. The information processing apparatus according to claim 3, wherein the processing means (12) selects the candidate text based on a similarity between the first text (52) and each of the plurality of texts.

5. The information processing apparatus according to claim 4, wherein, in addition to selecting a first candidate text based on the similarity, the processing means (12) randomly selects a second candidate text from the plurality of texts excluding the first candidate text.

6. The information processing apparatus according to claim 1, wherein
the processing means (12) is further configured to:
search the source document (40) for a text that exactly matches the first text;
output the first text as the citation portion upon determining that the source document includes the text that exactly matches the first text; and
extract the second text having the highest similarity to the first text from the source document upon determining that the source document does not include the text that exactly matches the first text.

7. The information processing apparatus according to claim 1, wherein
the processing means (12) is further configured to:
segment the source document (40) into a plurality of texts, each of the texts being a set of one or more sentences in the source document or a set of one or more words in the source document; and
extract the second text from the plurality of texts based on a similarity between the first text (52) and each of the plurality of texts.

8. A computer program that causes a computer to perform a process comprising:
acquiring a first text (52) output from a machine learning model (20) as a citation portion of a source document (40), the citation portion serving as a basis for a document (51) generated by the machine learning model based on the source document;
extracting, from the source document, a second text having a highest similarity to the first text;
comparing a similarity between the first text and the second text with a predetermined value; and
outputting the second text as the citation portion upon determining that the similarity is higher than the predetermined value.

9. An information processing method executed by a computer, the information processing method comprising:
acquiring a first text (52) output from a machine learning model (20) as a citation portion of a source document (40), the citation portion serving as a basis for a document (51) generated by the machine learning model based on the source document;
extracting, from the source document, a second text having a highest similarity to the first text;
comparing a similarity between the first text and the second text with a predetermined value; and
outputting the second text as the citation portion upon determining that the similarity is higher than the predetermined value.
